# EUROPÄISCHE PATENTSCHRIFT

(11) **EP 0 992 744 B1**
(45) Veröffentlichungstag und Bekanntmachung des Hinweises auf die Patenterteilung: **12.05.2004**
(21) Anmeldenummer: 99118010.0
(22) Anmeldetag: 20.09.1999
(51) Int. Cl.: F25B 49/02

(54) **Regeleinrichtung für einen Klimaanlagen-Kältemittekreislauf**
Control device for a refrigerant circuit of an air conditioning plant
Dispositif de régulation pour un circuit de frigorigène d'une installation de conditionnement d'air

(30) Priorität: 06.10.1998 DE 19846026
(43) Veröffentlichungstag der Anmeldung: 12.04.2000
(73) Patentinhaber: Behr GmbH & Co., 70469 Stuttgart (DE)
(72) Erfinder: Dienhart, Bernd, Dr.-Ing., 50935 Köln (DE); Katzenberger, Michael, Dipl.-Ing., 74336 Brackenheim-Hausen (DE); Krauss, Hans-Joachim, Dipl.-Ing., 70567 Stuttgart (DE); Lochmahr, Karl, Dipl.-Ing., 71665 Vaihingen (DE)

(56) Entgegenhaltungen:
- DE-A- 2 451 361
- DE-A- 3 706 152
- DE-A- 3 832 226
- DE-A- 4 008 877
- DE-A- 19 713 197
- DE-U- 8 814 725
- US-A- 3 364 692
- US-A- 5 058 390
- US-A- 5 138 844
- US-A- 5 168 715

## Beschreibung

Die Erfindung bezieht sich auf eine Regeleinrichtung für einen CO₂⁻ Kältemittelkreislauf einer Klimaanlage nach dem Oberbegriff des Anspruchs 1.

Der Kältemittelkreislauf von Klimaanlagen, wie sie insbesondere auch in Kraftfahrzeugen verwendet werden, ist üblicherweise durch einen Kompressor und ein Entspannungsorgan, wie ein regelbares Expansionsventil oder eine ein- oder mehrstufige Festdrossel, in eine Hochdruckseite und eine Niederdruckseite unterteilt. In Kältemittelströmungsrichtung beginnt die Hochdruckseite an der Kompressorausgangsseite und erstreckt sich bis zur Eingangsseite des Entspannungsorgans, während die Niederdruckseite an der Ausgangsseite des Entspannungsorgans beginnt und sich bis zur Eingangs- d.h. Saugseite des Kompressors erstreckt. Auf der Hochdruckseite und auf der Niederdruckseite befinden sich jeweils eine oder mehrere regelbare Klimaanlagenkomponenten, z.B. der Kompressor und das Expansionsventil selbst sowie regelbare Luftstromsteuerungsmittel, wie Luftgebläse und/oder Luftklappen, die einem hochdruckseitigen Kondensator und/oder einem niederdruckseitigen Verdampfer zugeordnet sind.

In jüngerer Zeit wird gerade auch für Kraftfahrzeug-Klimaanlagen die Verwendung des Kältemittels R744, d.h. CO₂, statt der herkömmlichen Kältemittel R134a und R12 in Betracht gezogen, siehe den Zeitschriftenaufsatz H. Gentner und A. Földi, Kohlendioxid als Kältemittel für Pkw-Klimaanlagen, Ki Luft- und Kältetechnik 1/1998, S. 19. Die dem Kompressor nachgeschaltete Kühleinheit wird in diesen CO₂-Anlagen nicht als Kondensator, wie bei den oben genannten herkömmlichen Kältemitteln, sondern als Gaskühler bezeichnet, da sie wegen der niedrigen kritischen Temperatur von CO₂ häufig im überkritischen Bereich arbeitet und daher keine Kondensation bewirkt. Wegen des häufig überkritischen Betriebs und der hohen auftretenden Betriebsdrücke stellen sich für CO₂-Klimaanlagen besondere Anforderungen, auch was deren Regelung betrifft.

Im Rahmen eines auch im oben zitierten Zeitschriftenaufsatz erwähnten europäischen Förderprojektes "RACE" wurde eine Regeleinrichtung für einen CO₂-Kältemittelkreislauf vorgeschlagen, die einen hochdruckseitigen Regelungsteil und einen davon unabhängigen, niederdruckseitigen Regelungsteil beinhaltet. Der hochdruckseitige Regelungsteil weist einen Regelkreis zur Regelung eines Expansionsventils auf einen Hochdruck-Sollwert auf, der über eine Leistungskennzahlsteuerung eingestellt wird, wobei unter Leistungskennzahl (abgekürzt COP) das Verhältnis von Kühlleistung zu effektiver Antriebsleistung der Anlage verstanden wird. Die COP-Regelung ermittelt den Hochdruck-Sollwert in Abhängigkeit von der Lufttemperatur an der Lufteintrittsseite des Gaskühlers. Der niederdruckseitige Regelungsteil beinhaltet einen Regelkreis zur Regelung des Kompressors auf einen vorgebbaren Saugdruck-Sollwert. Diesem Kompressorsaugdruck-Regelkreis ist ein Verdampfertemperatur-Regelkreis überlagert, der den Saugdruck-Sollwert in Abhängigkeit von der Regelabweichung der Verdampfertemperatur einstellt.

Der Erfindung liegt als technisches Problem die Bereitstellung einer CO₂⁻ Kältemittelkreislauf-Regeleinrichtung der eingangs genannten Art zugrunde, mit der sich Klimaanlagen, insbesondere solche mit regelbarem Kompressor und gegebenenfalls auch mit regelbarem Expansionsventil , mit relativ geringem regelungstechnischem Aufwand energiesparend und mit hohem Wirkungsgrad vergleichsweise exakt und stabil regeln lassen.

Die Erfindung löst dieses Problem durch die Bereitstellung einer Regeleinrichtung mit den Merkmalen des Anspruchs 1. Bei dieser Regeleinrichtung sind der hochdruckseitige und der niederdruckseitige Regelungsteil miteinander dadurch gekoppelt, daß wenigstens eine Einflußgröße des einen Regelungsteils eine Koppelgröße bildet, die in den anderen Regelungsteil als auch dort wirksame Einflußgröße eingekoppelt ist. Unter dem Begriff "Einflußgrößen" sind dabei all jene physikalischen Größen zu verstehen, die das Regelungsverhalten des betreffenden Regelungsteils beeinflussen, d.h. die von den Regelungskomponenten eingestellt oder diesen zugeführt werden. Der Einfachheit halber soll des weiteren vorliegend der Begriff "Regeln" auch bloße Steuerungseingriffe, d.h. Eingriffe ohne Rückkopplung, umfassen. Durch die Kopplung der beiden Regelungsteile können diese aufeinander abgestimmt arbeiten, so daß sich ein gewünschtes Regelverhalten der Klimaanlage zuverlässig und mit stabilem Regelverhalten erreichen läßt, beispielsweise die Erzielung einer gewünschten Verdampfertemperatur. Es zeigt sich, daß insbesondere auch CO₂-Klimaanlagen auf diese Weise zufriedenstellend geregelt werden können, wobei durch entsprechende Systemauslegung gerade auch im niedrigen Leistungsbereich ein energiesparender Betrieb möglich ist, so daß ein vergleichsweise hoher Gesamtwirkungsgrad erreicht wird.

Bei einer nach Anspruch 2 weitergebildeten Regeleinrichtung dient eine niederdruckseitige Einflußgröße als Koppelgröße, die in den hochdruckseitigen Regelungsteil eingekoppelt ist, wobei es sich bei der Koppelgröße um die Stellgröße eines niederdruckseitigen Saugdruckreglers oder um die Stellgröße eines niederdruckseitigen Verdampfertemperaturreglers handelt.

In einer nach Anspruch 3 weitergebildeten Regeleinrichtung dient die vom niederdruckseitigen in den hochdruckseitigen Regelungsteil eingekoppelte Einflußgröße im hochdruckseitigen Regelungsteil zur Einstellung des Sollwertes für einen Hochdruckregler und/oder zur Einstellung der Leistung eines Luftgebläses für eine dem Kompressor nachgeschaltete Kühleinheit, wie eines Kondensators oder Gaskühlers.

Vorteilhafte Ausführungsformen der Erfindung sind in den Zeichnungen dargestellt und werden nachfolgend beschrieben. Hierbei zeigen:
- Fig. 1: ein Blockdiagramm einer Kältemittelkreislauf-Regeleinrichtung mit Hochdruck-Regelkreis und niederdruckseitigen, überlagerten Saugdruck- und Verdampfertemperatur-Regelkreisen sowie mit Kopplung des Hochdruck-Regelkreises und einer Kühleinheit-Lüfterregelung an ein Saugdruck-Stellsignal,
- Fig. 2: ein Blockdiagramm einer Regeleinrichtung entsprechend Fig. 1, jedoch ohne Hochdruck-Regelkreis, und
- Fig. 3: ein Blockdiagramm einer Regeleinrichtung entsprechend Fig. 2, jedoch ohne Saugdruck-Regelkreis.

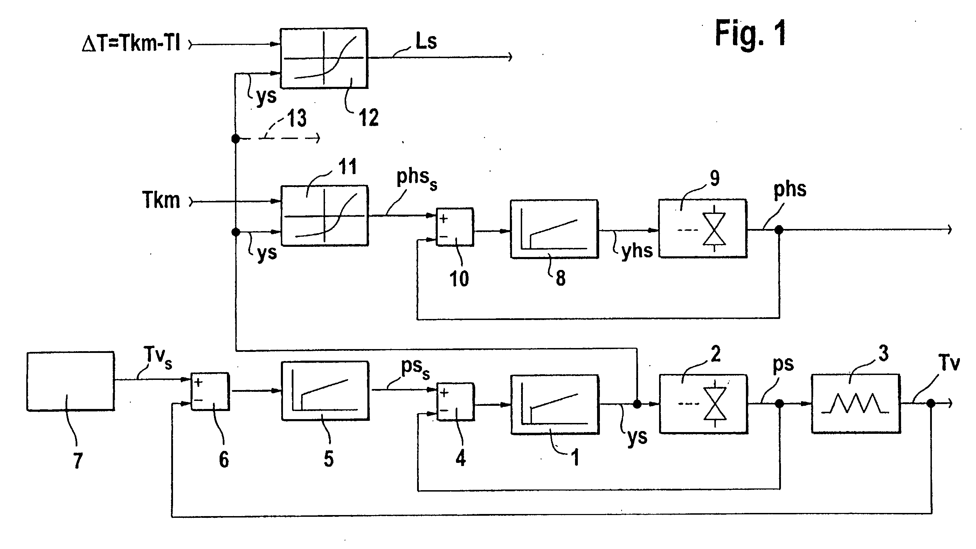

Die in den Fig. 1 bis 3 gezeigten Regeleinrichtungen für einen Kältemittelkreislauf eignen sich insbesondere auch zur Regelung von CO₂-Klimaanlagen in Kraftfahrzeugen, wobei sich die drei gezeigten Beispiele durch das Vorhandensein bzw. Fehlen eines Hochdruck-Regelkreises und eines Kompressorsaugdruck-Regelkreises unterscheiden.

Die Regeleinrichtung von Fig. 1 beinhaltet einen niederdruckseitigen Regelungsteil, der aus einem Kompressorsaugdruck-Regelkreis und einem diesen überlagernden Verdampfertemperatur-Regelkreis besteht. Der Saugdruck-Regelkreis beinhaltet einen Saugdruckregler 1, dessen Stellsignal ys ein Kompressorventil eines regelbaren Kompressors 2 steuert. Durch die Wirkung des Kompressors 2 stellt sich an der Kältemittelaustrittsseite eines dem Kompressor 2 kältemittelströmungstechnisch vorgeschalteten Verdampfers 3 ein bestimmter Saugdruck-Istwert ps ein, der auf die Funktion des Verdampfers 3 wirkt und zu einer dem Saugdruckregler 1 vorgeschalteten Einheit 4 zur Bestimmung der Saugdrück-Regelabweichung rückgeführt ist, welcher andererseits ein gewünschter Saugdruck-Sollwert psₛ zugeführt ist. Ziel ist die Einstellung des Kompressorsaugdrucks ps auf einen zugehörigen Sollwert psₛ, der in Abhängigkeit von der benutzerseitig gewünschten Verdampfertemperatur Tv festgelegt wird. Um die Erzielung der gewünschten Verdampfertemperatur Tv auch bei Auftreten physikalischer Störeffekte sicherzustellen, ist dem Saugdruck-Regelkreis der Verdampfertemperatur-Regelkreis überlagert. Dieser beinhaltet einen Verdampfertemperaturregler 5, der als Stellsignal den Saugdruck-Sollwert psₛ abgibt und dem eine Einheit 6 zur Bestimmung der Verdampfertemperatur-Regelabweichung vorgeschaltet ist, der zum einen der Verdampfertemperatur-Istwert Tv rückgeführt und zum anderen ein an einem benutzerbetätigbaren Bedienelement 7, wie einem Einstellknopf, einstellbarer Verdampfertemperatur-Sollwert Tvₛ zugeführt ist. Der Ermittlung des Saugdruck-Sollwertes psₛ liegt dabei eine beispielsweise linear ansteigende Kennlinie für den Saugdruck-Sollwert psₛ in Abhängigkeit vom Verdampfertemperatur-Sollwert Tvₛ zugrunde.

Auf der Hochdruckseite besitzt die Regeleinrichtung einen Hochdruck-Regelkreis mit einem Hockdruckregler 8, dessen Stellsignal yhs ein regelbares Expansionsventil 9 ansteuert. Dem Hochdruckregler 8 ist eine Einheit 10 zur Bestimmung der Hochdruckregelabweichung vorgeschaltet, der zum einen der vom Expansionsventil 9 bewirkte Hockdruck-Istwert phs und zum anderen ein Hochdruck-Sollwert phsₛ zugeführt ist. Dieser Hochdruck-Sollwert phsₛ wird von einer Hochdrucksollwert-Berechnungseinheit 11 abgegeben.

Charakteristischerweise bestimmt die Hochdrucksollwert-Berechnungseinheit 11 den Hochdruck-Sollwert phsₛ nicht nur in Abhängigkeit von der Kältemitteltemperatur Tkm an der Kältemittelaustrittsseite einer dem Kompressor 2 kältemittelströmungstechnisch nachgeschalteten Kühleinheit in Form eines Kondensators bzw. Gaskühlers, sondern zusätzlich in Abhängigkeit vom Stellsignal ys des Saugdruckreglers 1 und damit in Abhängigkeit von einer Einflußgröße des niederdruckseitigen Regelungsteils. Des weiteren wird das Saugdruckregler-Stellsignal ys in eine Lüftersteuereinheit 12 als einer weiteren niederdruckseitigen Regelungskomponente eingekoppelt, die zur Einstellung einer gewünschten Gebläseleistung eines Lüftergebläses für einen über die Kühleinheit geführten Kühlluftstrom dient. Die Lüftersteuereinheit 12 nimmt die Bestimmung der Gebläseleistung in Abhängigkeit sowohl vom Saugdruckregler-Stellsignal ys als auch von der Temperaturdifferenz ΔT=Tkm-Tl zwischen der Kältemitteltemperatur Tkm an der Kältemittelaustrittsseite der Kühleinheit und der Kühllufttemperatur Tl an der Luftstromeintrittsseite der Kühleinheit vor und steuert mit ihrem Ausgangssignal Ls den Lüfter entsprechend an. Diese Lüfteransteuerung wird außerdem zweckmäßigerweise so vorgenommen, daß der Gesamtenergiebedarf der Anlage minimal bleibt. Optional ist, wie in Fig. 1 gestrichelt angedeutet, vorgesehen, das niederdruckseitige Saugdruckregler-Stellsignal ys über einen zugehörigen Kopplungsleitungszweig 13 einer Steuereinheit für eine ansteuerbare Umluftklappe zuzuführen, um selbige in Abhängigkeit davon einzustellen, beispielsweise die Umluftklappe zu schließen, wenn sich das Saugdruckregler-Stellsignal ys in einem Bereich befindet, der einem Maximalbereich des Hochdrucks phs entspricht.

Durch die Einkopplung des Saugdruckregler-Stellsignals ys wird der hochdruckseitige Regelungsteil in vorteilhafter Weise an den niederdruckseitigen Regelungsteil gekoppelt. Es zeigt sich, daß damit eine sehr zufriedenstellende Regelung gerade auch von CO₂-Klimaanlagen möglich ist, bei welcher der durch die Regelung eingestellte Hochdruck phs und die Ansteuerung des Gaskühlers bzw. Kondensators, d.h. von dessen Kühlluftgebläse, an die momentane Kühlleistung der Anlage angepaßt sind. Insbesondere im Bereich kleiner Kühlleistung, wo herkömmliche Regelungen von CO₂-Klimaanlagen nicht immer energieverbrauchsoptimal arbeiten, läßt sich durch die erfindungsgemäße Kopplung von hochdruckseitigem und niederdruckseitigem Regelungsteil ein energiesparender und gleichzeitig zuverlässiger, regelungsstabiler Anlagenbetrieb realisieren. Dies verbessert den Wirkungsgrad der Klimaanlage insgesamt.

Die Stellgröße ys des Saugdruckreglers 1 bildet hierbei die Basis des Regelkreises und wird als Maß für die momentan benötigte Kühlleistung interpretiert, woraus der Hochdruck-Sollwert phsₛ und das Stellsignal Ls für die Ansteuerung des Lüfters des Gaskühlers abgeleitet werden. Speziell kann für die Abhängigkeit des Lüfterstellsignals Ls eine in etwa gemäß dem gezeigten Insert der Lüftersteuereinheit 12 mit wachsendem Saugdruckregler-Stellsignal ys und damit wachsendem Kühlleistungsbedarf ansteigende Kennlinie gewählt sein. Die Abhängigkeit von der besagten Temperaturdifferenz ΔT kann durch einen multiplikativen, zwischen den Werten 0 und 1 normierten Faktor berücksichtigt werden, der unterhalb eines unteren Schwellwertes des Temperaturdifferenzbetrages auf 0 und oberhalb eines oberen Schwellwertes auf 1 gesetzt wird und zwischen den beiden Schwellwerten einen von 0 auf 1 ansteigenden Verlauf besitzt. Die Abhängigkeit des Hochdruck-Sollwertes phsₛ von der Saugdruckregler-Stellgröße ys kann qualitativ in etwa den im Insert der Hochdrucksollwert-Berechnungseinheit 11 gezeigten, mit wachsendem Saugdruckregler-Stellsignal ys ansteigenden Verlauf besitzen. Die Abhängigkeit des Hochdruck-Sollwertes phsₛ von der besagten Kältemitteltemperatur Tkm kann in Form eines additiven Korrekturwertes realisiert sein, der mit anwachsender Kältemitteltemperatur Tkm ansteigt.

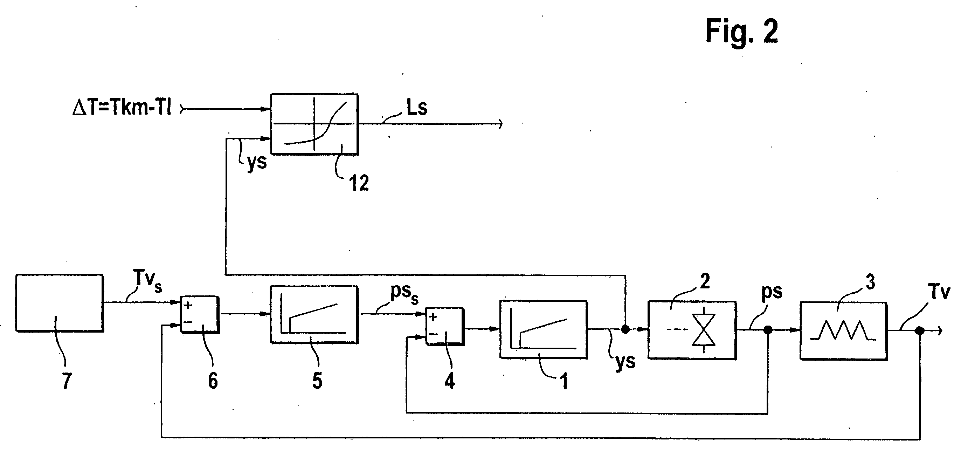

Fig. 2 zeigt eine Regeleinrichtung, die derjenigen von Fig. 1 mit der Ausnahme entspricht, daß kein Hochdruck-Regelkreis vorgesehen ist. Im übrigen stimmen die verwendeten Regelungskomponenten und die relevanten Prozeßgrößen überein, so daß diesbezüglich dieselben Bezugszeichen verwendet sind und auf die Erläuterung zu Fig. 1 verwiesen werden kann. Diese Regeleinrichtung eignet sich insbesondere für Klimaanlagen, bei denen das Entspannungsorgan nicht durch ein regelbares Expansionsventil, sondern durch eine einstufige oder eine mehrstufig umschaltbare Festdrosselanordnung realisiert ist. Die Kopplung von hochdruckseitigem und niederdruckseitigem Regelungsteil beinhaltet in diesem Fall die Einkopplung der niederdruckseitigen Saugdruckregler-Stellgröße ys in die hochdruckseitige Lüftersteuereinheit 12 zur Ansteuerung des Lüftergebläses des Gaskühlers bzw. Kondensators. Damit wird diese hochdruckseitige, regelbare Anlagenkomponente in ihrer Leistungsabgabe an den momentanen Kühlleistungsbedarf der Anlage angepaßt, wie er aus dem Saugdruckregler-Stellsignal ys abgeleitet wird. Zu den Vorteilen der Ankopplung des hochdruckseitigen an den niederdruckseitigen Regelungsteil kann auf das zu Fig. 1 Gesagte verwiesen werden.

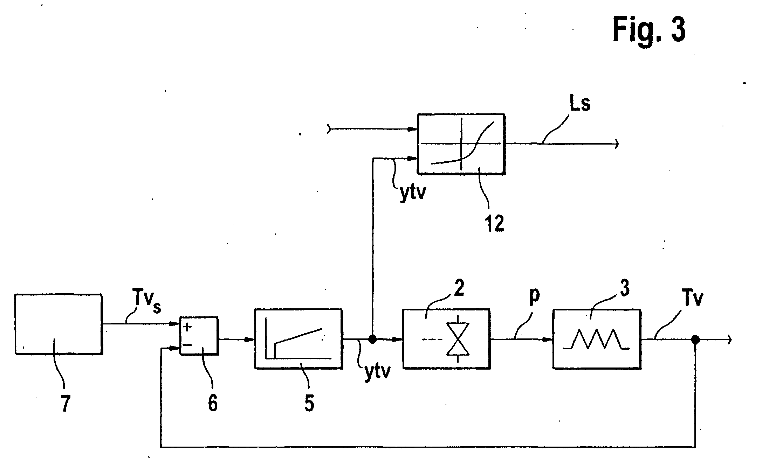

Fig. 3 zeigt eine gegenüber Fig. 2 weiter dadurch vereinfachte Regeleinrichtung, daß niederdruckseitig auf den Saugdruck-Regelkreis verzichtet wird. Ansonsten enthält diese Regeleinrichtung dieselben Komponenten und Prozeßgrößen wie die Regeleinrichtung von Fig. 2, so daß diesbezüglich gleiche Bezugszeichen verwendet sind und zu deren Beschreibung auf diejenige von Fig. 2 bzw. Fig. 1 verwiesen werden kann. Im Ausführungsbeispiel von Fig. 3 gibt der Verdampfertemperaturregler 5 ein Stellsignal ytv ab, das funktionell an die Stelle des Saugdruckregler-Stellsignals ys der Einrichtung von Fig. 2 tritt, indem es einerseits als Stellsignal für den Kompressor 2 dient und andererseits in den hochdruckseitigen Regelungsteil eingekoppelt wird, speziell in die Lüftersteuereinheit 12 zur Ansteuerung des Lüftergebläses des Gaskühlers bzw. Kondensators. Der Saugdruck p stellt in diesem Fall keine direkt, sondern nur indirekt über die Verdampfertemperaturregelung geregelte Prozeßgröße dar. Auch für dieses Beispiel der Ankopplung des hochdruckseitigen an den niederdruckseitigen Regelungsteil ergeben sich weitgehend die zu den Einrichtungen der Fig. 1 und 2 genannten Vorteile.

Während in den gezeigten Beispielen die Kopplung zwischen niederdruckseitigem und hochdruckseitigem Regelungsteil über eine einzige, vom niederdruckseitigen zum hochdruckseitigen Regelungsteil eingekoppelte Einflußgröße realisiert ist, sind auch anderweitige Kopplungsarten möglich. So kann der hochdruckseitige Regelungsteil über mehrere vom niederdruckseitigen Regelungsteil eingekoppelte Einflußgrößen an diesen angekoppelt sein. Alternativ oder zusätzlich zur Einkopplung niederdruckseitiger Einflußgrößen in den hochdruckseitigen Regelungsteil können umgekehrt eine oder mehrere hochdruckseitige Einflußgrößen der Regelung in den niederdruckseitigen Regelungsteil eingekoppelt werden, je nach Bedarf und Anwendungsfall. In jedem Fall läßt sich dies jeweils so realisieren, daß eine vorteilhafte Abstimmung der beiden Regelungsteile aufeinander bzw. auf die angeforderte Kühlleistung der Anlage bewirkt wird.

## Patentansprüche

1. Regeleinrichtung für einen CO₂-Kältemittelkreislauf einer Klimaanlage, insbesondere eines Kraftfahrzeuges, wobei der CO₂-Kältemittelkreislauf durch einen Kompressor und ein Entspannungsorgan in eine Hochdruckseite und eine Niederdruckseite unterteilt ist, mit
- einem separaten hochdruckseitigem Regelungsteil zur Regelung einer oder mehrerer regelbarer hochdruckseitiger Klimaanlagenkomponenten (9, 12) und
- einem separaten niederdruckseitigem Regelungsteil zur Regelung einer oder mehrerer regelbarer niederdruckseitiger Klimaanlagenkomponenten (2),
**dadurch gekennzeichnet, dass**
- die beiden separaten Regelungsteile miteinander gekoppelt sind, indem wenigstens eine Einflußgröße (ys, ytv) des einen Regelungsteils eine Koppelgröße bildet, die in den anderen Regelungsteil als auch dort wirksame Einflußgröße eingekoppelt ist.

2. Regeleinrichtung nach Anspruch 1, weiter **dadurch gekennzeichnet, dass** die Koppelgröße durch die Stellgröße (ys) eines niederdruckseitigen Kompressorsaugdruckreglers (1) oder die Stellgröße (ytv) eines niederdruckseitigen Verdampfertemperaturreglers (5) gebildet und in den hochdruckseitigen Regelungsteil eingekoppelt ist.

3. Gehäuse nach Anspruch 1 oder 2, weiter **dadurch gekennzeichnet, dass** die Koppelgröße eine niederdruckseitige Einflußgröße (ys, ytv) ist, die in den hochdruckseitigen Regelungsteil als dortige Einflußgröße zur Einstellung des Sollwertes (phsₛ) für einen Hochdruckregler (8) und/oder zur Einstellung der Leistung eines Luftgebläses für eine dem Kompressor kältemittelströmungstechnisch nachgeschaltete Kältemittel-Kühleinheit eingekoppelt ist.

## Claims

1. Regulator for a CO₂ coolant circuit of a air-conditioning unit, particularly one of a vehicle, whereby the CO₂ coolant circuit is divided up into a high-pressure side and a low-pressure side, by means of a compressor and an expansion body, with
- a separate high-pressure side regulator component for regulating one or more adjustable high-pressure side air-conditioning components (9, 12) and
- a separate low-pressure side regulator component for regulating one or more adjustable low-pressure side air-conditioning components (2)
**characterized in that**
- both separate regulator sections are connected to each other, whereby at least one extent of influence (ys, ytv) of the one regulation component forms one level of connection into the other regulation component and the connection level that is also effective there.

2. Regulator in accordance with claim 1, further **characterized in that**, the connection magnitude is formed by the extent of adjustment (ys) of a low-pressure side compressor suction-pressure regulator (1) or the extent of adjustment (ytv) of a low-pressure side vaporizer temperature-regulator (5) and is connected into the high-pressure side regulator-component.

3. Housing in accordance with claim 1 or 2, further **characterized in that** the extent of connection is a low-pressure side extent of inflow (ys, ytv) which is connected into the high-pressure side regulation component as the level of influence in setting the required value (phsₛ) for a high-pressure regulator (8) and/or for setting the output of a blower for a coolant cooler unit connected, in terms of coolant flow engineering, to the outlet side of the compressor.

## Revendications

1. Dispositif de régulation pour un circuit d'agent réfrigérant à base de CO₂ d'un système de climatisation, en particulier d'un véhicule automobile, où le circuit d'agent réfrigérant à base de CO₂ est divisé par un compresseur et par un organe de détente, en un côté haute pression et un côté basse pression, comprenant :
- une partie de régulation distincte, côté haute pression, servant à la régulation d'un ou de plusieurs composants réglables (9, 12) du système de climatisation, côté haute pression, et
- une partie de régulation distincte, côté basse pression, servant à la régulation d'un ou de plusieurs composants réglables (2) du système de climatisation, côté basse pression,
**caractérisé**
**en ce que** les deux parties de régulation distinctes sont couplées l'une à l'autre, tandis qu'au moins une variable d'influence (ys, ytv) de l'une des parties de régulation forme une variable de couplage qui est intégrée dans l'autre partie de régulation, formant également une variable d'influence efficace dans cette autre partie de régulation.

2. Dispositif de régulation selon la revendication 1, **caractérisé en outre en ce que** la variable de couplage est formée par la variable de réglage (ys) d'un régulateur (1) de la pression d'aspiration du compresseur, côté basse pression, ou par la variable de réglage (ytv) d'un régulateur de température (5) de l'évaporateur, côté basse pression, et est intégrée dans la partie de régulation, côté haute pression.

3. Dispositif de régulation selon la revendication 1 ou 2, **caractérisé en outre en ce que** la variable de couplage est une variable d'influence (ys, ytv), côté basse pression, qui est intégrée dans la partie de régulation, côté haute pression, comme variable d'influence servant, dans cette partie de régulation, au réglage de la valeur théorique (phsₛ) pour un régulateur (8) à haute pression et/ou au réglage de la puissance d'une soufflante de ventilation pour une unité de refroidissement d'agent réfrigérant montée en aval - du point de vue de la technique concernant l'écoulement de l'agent réfrigérant - du compresseur.
